# EUROPEAN PATENT SPECIFICATION

(11) **EP 3 392 036 B1**
(45) Date of publication and mention of the grant of the patent: **30.03.2022**
(21) Application number: 16879007.9
(22) Date of filing: 22.12.2016
(51) Int. Cl.: B32B 27/00, C08J 7/04, B32B 27/22, C08G 65/336, C09D 183/12, C08L 71/00, C08L 71/02, C08L 101/10

(54) **METHOD FOR PRODUCING LAMINATE, AND LAMINATE**
VERFAHREN ZUR HERSTELLUNG VON LAMINAT SOWIE LAMINAT
PROCÉDÉ DE PRODUCTION DE STRATIFIÉ, ET STRATIFIÉ

(30) Priority: 24.12.2015 JP 2015251235
(43) Date of publication of application: 24.10.2018
(73) Proprietor: Kaneka Corporation, Osaka-shi, Osaka 530-8288 (JP)
(72) Inventor: OGAWA, Akira, Takasago-shi Hyogo 676-8688 (JP)
(74) Representative: Vossius & Partner Patentanwälte Rechtsanwälte mbB
(86) International application number: PCT/JP2016/088546
(87) International publication number: WO 2017/111121

(56) References cited:
- EP-A1- 2 644 657
- WO-A1-2012/070476
- JP-A- 2000 129 145
- JP-A- 2000 129 145
- JP-A- 2001 048 979
- JP-A- 2002 356 613
- JP-A- 2012 102 154
- JP-A- 2014 504 303
- US-A- 5 476 889

## Description

### TECHNICAL FIELD

The present invention relates to a method for producing a laminate comprising a substrate, a cured product of a curable composition which contains a polyoxyalkylene polymer having a reactive silicon group, and a coating film of a coating material, and the laminate.

### BACKGROUND ART

It is known that a polyoxyalkylene polymer having a reactive silicon group is crosslinked by the formation of a siloxane bond, which is accompanied by hydrolysis and the like of the reactive silicon group due to moisture and the like even at room temperature, to give a rubber-like cured product.

The polyoxyalkylene polymer having a reactive silicon group is already industrially produced and widely used for applications such as sealing material, adhesive, coating material and the like (Patent Documents 1 and 2). Patent Document 8 is directed to the preparation of a coating composition. The composition comprises a polyoxyalkylene polymer having a reactive silicone group, an antioxidant and a dioctyl phthalate plasticizer.

Meanwhile, application of a curable composition which contains an organic polymer having a reactive silicon group is contemplated for the purpose of adhesion, waterproofing, corrosion proofing or the like of a frame or a panel of a vehicle such as an automobile, a bus, a truck, or a train (Patent Documents 3 to 7).

Patent Document 1: Japanese Unexamined Patent Application, Publication No. 2005-097455
Patent Document 2: Japanese Unexamined Patent Application, Publication No. 2015-059127
Patent Document 3: Japanese Unexamined Patent Application (Translation of PCT Application), Publication No. H11-500759
Patent Document 4: Japanese Unexamined Patent Application, Publication No. 2002-146216
Patent Document 5: Japanese Unexamined Patent Application, Publication No. 2003-213118
Patent Document 6: Japanese Unexamined Patent Application, Publication No. H08-041349
Patent Document 7: Chinese Patent Application Publication No. 104694065 Patent Document 8: JP 2000 129145 A

### DISCLOSURE OF THE INVENTION

### Problems to be solved by the Invention

For a process of producing a vehicle or the like, a curable composition which contains a polyoxyalkylene polymer having a reactive silicon group is coated on a substrate like a frame or a panel of a vehicle and cured at room temperature, and then a coating material is applied on a cured product of the curable composition followed by curing by heating. In that case, for curing the coating material within a short time for the purpose of enhancing the productivity, there is a case in which the curing by heating is carried out at even higher temperature than conventional cases. However, there is also a case in which, if a conventionally known curable composition is used, thermal degradation of a cured product occurs due to the curing by heating at high temperature to yield a poor adhesion property between the cured product and coating material. Due to such reasons, there has been a demand for a method for producing a laminate comprising a substrate like a vehicle component, a cured product of a curable composition, and a coating film of a coating material by using a curable composition while having those problems suppressed.

### Means for Solving the Problems

As a result of carrying out intensive studies to solve the aforementioned problems, the inventors of the present invention found that the aforementioned problems can be solved by using a curable composition which comprises (A) a polyoxyalkylene polymer having a reactive silicon group, (B) an epoxy plasticizer which is (B1) epoxyhexahydrophthalic acid dialkyl ester and/or (B2) epoxidized fatty acid alkyl ester, and (C) an antioxidant, and completed the present invention accordingly.

Namely, the present invention relates to the followings;
(1) A method for producing a laminate comprising a substrate, a cured product of a curable composition, and a coating film of a coating material,
   wherein the method includes curing the coating material by heating,
   the cured product of a curable composition is present on a substrate,
   the coating film is present on the cured product of a curable composition,
   the curable composition comprises (A) a polyoxyalkylene polymer having a reactive silicon group, (B) an epoxy plasticizer, and (C) an antioxidant,
   the amount of (B) the epoxy plasticizer is 30 to 100 parts by weight relative to 100 parts by weight of (A) the polyoxyalkylene polymer having a reactive silicon group,
   the amount of (C) the antioxidant is 2 to 10 parts by weight relative to 100 parts by weight of (A) the polyoxyalkylene polymer having a reactive silicon group,
   (B) the epoxy plasticizer is (B1) epoxyhexahydrophthalic acid dialkyl ester and/or (B2) epoxidized fatty acid alkyl ester,
   an alkyl group (b1) of the alkyl ester moiety in (B1) the epoxyhexahydrophthalic acid dialkyl ester is a linear or branched alkyl group having 1 to 20 carbon atoms which may be epoxidized, and
   an alkyl group (b2) of the alkyl ester moiety in (B2) the epoxidized fatty acid alkyl ester is a linear or branched alkyl group having 1 to 20 carbon atoms,
(2) The method for producing a laminate according to (1), wherein the curing of a coating material is carried out at 100°C or higher,
(3) The method for producing a laminate according to (1), wherein the component (A) is a polyoxyalkylene polymer which has a reactive silicon group and contains a urethane bond and/or a urea bond,
(4) The method for producing a laminate according to any one of (1) to (3), wherein the main chain structure of the component (A) is a polyoxypropylene polymer,
(5) The method for producing a laminate according to any one of (1) to (4), wherein the reactive silicon group of the component (A) is represented by the following General Formula (1) :

   -SiR¹₃₋ₐXₐ (1)

   (in General Formula (1), each R¹ independently represents an alkyl group having 1 to 20 carbon atoms, an aryl group having 6 to 20 carbon atoms, an aralkyl group having 7 to 20 carbon atoms, or a triorganosiloxy group represented by -OSi(R')₃ (in the formula, each R' independently represents a hydrocarbon group having 1 to 20 carbon atoms), each X independently represents a hydroxy group or a hydrolyzable group, and a represents an integer of 1 to 3),
(6) The method for producing a laminate according to any one of (1) to (5), wherein (C) the antioxidant is a hindered phenol-based antioxidant,
(7) The method for producing a laminate according to any one of (1) to (6), wherein the method includes the following steps 1 to 4:
   step 1: a step of coating the curable composition containing the component (A), the component (B), and the component (C) on a substrate,
   step 2: a step of aging the curable composition, which has been coated in step 1, at room temperature for curing,
   step 3: a step of applying a coating material on a cured product of the curable composition, which has been cured in
   step 2, and
   step 4: a step of curing the coating material, which has been applied in step 3, by heating at 100°C or higher,
(8) The method for producing a laminate according to any one of (1) to (7), wherein the curable composition is a one liquid type composition,
(9) A laminate comprising a substrate, a cured product of a curable composition, and a coating film of a coating material, wherein the cured product of a curable composition is present on a substrate,
   the coating film is present on the cured product of a curable composition and cured by heating,
   the curable composition comprises (A) a polyoxyalkylene polymer having a reactive silicon group, (B) an epoxy
   plasticizer, and (C) an antioxidant,
   the amount of (B) the epoxy plasticizer is 30 to 100 parts by weight relative to 100 parts by weight of (A) the polyoxyalkylene polymer having a reactive silicon group,
   the amount of (C) the antioxidant is 2 to 10 parts by weight relative to 100 parts by weight of (A) the polyoxyalkylene polymer having a reactive silicon group,
   (B) the epoxy plasticizer is (B1) epoxyhexahydrophthalic acid dialkyl ester and/or (B2) epoxidized fatty acid alkyl ester,
   an alkyl group (b1) of the alkyl ester moiety in (B1) the epoxyhexahydrophthalic acid dialkyl ester is a linear or branched alkyl group having 1 to 20 carbon atoms which may be epoxidized, and
   an alkyl group (b2) of the alkyl ester moiety in (B2) the epoxidized fatty acid alkyl ester is a linear or branched alkyl group having 1 to 20 carbon atoms, and
(10) The laminate described in (9), in which the curable composition is a one liquid type composition.

### Effects of the Invention

The present invention provides a laminate exhibiting excellent thermal degradation resistance and coating material adhesion property, which comprises a substrate, a cured product of a curable composition, and a coating film of a coating material, said laminate being produced by using a curable composition with specific composition to contain a polyoxyalkylene polymer having a reactive silicon group, and a method for producing the same.

### PREFERRED MODE FOR CARRYING OUT THE INVENTION

Hereinbelow, the present invention is explained in detail.

### <<Method for producing laminate>>

The laminate includes a substrate, a cured product of a curable composition, and a coating film of a coating material. The method for producing the laminate includes curing the coating material by heating. In the laminate, the cured product of a curable composition is present on a substrate, and the coating film is present on the cured product of a curable composition. As for the curable composition described above, a curable composition having specific composition that will be described below is used. Hereinbelow, the method for producing a laminate is described in detail.

### <Curable composition>

For forming a cured product on a substrate, a curable composition is used. The curable composition contains (A) a polyoxyalkylene polymer having a reactive silicon group, (B) an epoxy plasticizer, and (C) the antioxidant. Hereinbelow, explanations are given for the essential or optional components that are contained in the curable composition.

### [(A) Polyoxyalkylene polymer having a reactive silicon group]

The reactive silicon group of (A) the polyoxyalkylene polymer having a reactive silicon group is a group which has a hydroxy group or a hydrolyzable group bonded to silicon atom, and can be crosslinked by forming a siloxane bond by a reaction accelerated by a silanol condensation catalyst. Herein, the hydrolyzable group means a group which produces a hydroxy group upon reaction with water. Hereinbelow, (A) the polyoxyalkylene polymer having a reactive silicon group is also described as the component (A).

The reactive silicon group is represented by the following General Formula (1).

-SiR¹₃₋ₐXₐ (1)

In General Formula (1), each R¹ independently represents an alkyl group having 1 to 20 carbon atoms, an aryl group having 6 to 20 carbon atoms, an aralkyl group having 7 to 20 carbon atoms, or a triorganosiloxy group represented by -OSiR'₃ (in the formula, each R' independently represents a hydrocarbon group having 1 to 20 carbon atoms). Each X independently represents a hydroxy group or a hydrolyzable group. "a" represents an integer of 1 to 3.

The hydrolyzable group is not particularly limited and may be a conventionally known hydrolyzable group. Examples of the hydrolyzable group include a hydrogen atom, a halogen atom, an alkoxy group, an acyloxy group, a ketoxymate group, an amino group, an amide group, an aminooxy group, a mercapto group, an alkenyloxy group and the like. Of these, a hydrogen atom, an alkoxy group, an acyloxy group, a ketoxymate group, an amino group, an amide group, an aminooxy group, a mercapto group, and an alkenyloxy group are preferable. An alkoxy group is particularly preferable since it shows mild hydrolyzability and thus is easy to handle.

The hydrolyzable group or hydroxy group in the number range of 1 to 3 can be bonded to one silicon atom. When two or more hydrolyzable groups or hydroxy groups are bonded to a reactive silicon group, they may be the same or different.

The "a" in General Formula (1) is preferably 2 or 3 from the viewpoint of curability. When rapid curability of the curable composition is particularly desired, it is preferably 3, and when storage stability of the curable composition is desired, it is preferably 2.

Specific examples of R¹ in General Formula (1) include alkyl groups such as methyl group, ethyl group and the like, cycloalkyl groups such as cyclohexyl group and the like, aryl groups such as phenyl group and the like, aralkyl groups such as benzyl group and the like, triorganosiloxy groups represented by -OSiR'₃ in which R' is a methyl group, a phenyl group, and the like. Of these, a methyl group is particularly preferable.

Examples of the reactive silicon group include a trimethoxysilyl group, a triethoxysilyl group, a triisopropoxysilyl group, a dimethoxymethylsilyl group, a diethoxymethylsilyl group, a diisopropoxymethylsilyl group, a (chloromethyl)dimethoxysilyl group, and a (methoxymethyl)dimethoxysilyl group.

Among them, from the viewpoint of obtaining high activity and good curability, a trimethoxysilyl group, a triethoxysilyl group, a dimethoxymethylsilyl group, and a (methoxymethyl)dimethoxysilyl group are preferable, a trimethoxysilyl group, a (methoxymethyl)dimethoxysilyl group, and a dimethoxymethylsilyl group are more preferable, and a trimethoxysilyl group is even more preferable. Furthermore, from the viewpoint of storage stability, a dimethoxymethylsilyl group and a triethoxysilyl group are preferable. Furthermore, because the alcohol produced by the hydrolysis of the reactive silicon group is ethanol, a triethoxysilyl group and a diethoxymethylsilyl group are preferable from the viewpoint of having even higher safety.

The reactive silicon group can be introduced by a known method. Examples of the method include the following methods.

Method I: An organic polymer having a functional group like hydroxy group is reacted with a compound having an active group exhibiting reactivity for the functional group and an unsaturated group to obtain an organic polymer having an unsaturated group. Subsequently, according to hydrosilylation, the obtained organic polymer having an unsaturated group is reacted with a hydrosilane compound having a reactive silicon group.

Examples of the compound having an active group exhibiting reactivity and an unsaturated group, which is used for Method I, include allyl chloride, methallyl chloride, and an epoxy compound containing an unsaturated group such as allyl glycidyl ether.

Examples the hydrosilane compound to be used for Method I include halogenated silanes, alkoxysilanes, acyloxysilanes, and ketoxymatesilanes, but are not limited thereto.

Examples of the halogenated silanes include trichlorosilane, methyldichlorosilane, dimethylchlorosilane, and phenyldichlorosilane.

Examples of the alkoxysilanes include trimethoxysilane, triethoxysilane, diethoxymethylsilane, dimethoxymethylsilane, phenyldimethoxysilane, and 1-[2-(trimethoxysilyl)ethyl]-1,1,3,3-tetramethyldisiloxane.

Examples of the acyloxysilanes include methyldiacetoxysilane and phenyldiacetoxysilane.

Examples of the ketoxymatesilanes include bis(dimethylketoxymate)methylsilane and bis(cyclohexylketoxymate)methyl silane.

Among them, halogenated silanes and alkoxysilanes are preferable, in particular. The alkoxysilanes are most preferable since the curable composition to be obtained has mild hydrolyzability and is easy to handle.

Of the alkoxysilanes, dimethoxymethylsilane is particularly preferable since it is easily available, and a curable composition containing the organic polymer to be obtained is high in the curability, storage stability, elongation property, and tensile strength. Furthermore, trimethoxysilane is particularly preferable from the viewpoint of the curability and restoration property of the curable composition to be obtained.

Method II: A method in which a compound having a mercapto group and a reactive silicon group is introduced, according to a radical addition reaction in the presence of a radical initiator and/or a radical source and the like, to an unsaturated group moiety of an organic polymer having an unsaturated group that is obtained in the same manner as in the method of (I) can be mentioned.

Examples of the compound having a mercapto group and a reactive silicon group to be used for Method II include γ-mercaptopropyltrimethoxysilane, γ-mercaptopropylmethyldimethoxysilane, γ-mercaptopropyltriethoxysilane, γ-mercaptopropylmethyldiethoxysilane, mercaptomethyltrimethoxysilane, and mercaptomethyltriethoxysilane, but are not limited thereto.

Method III: An organic polymer having a functional group such as hydroxy group, epoxy group, isocyanate group and the like in the molecule is reacted with a compound having a functional group exhibiting reactivity for the functional group and a reactive silicon group.

With regard to Method III, the method described in JP H03-47825 A can be mentioned as a method in which an organic polymer having a hydroxy group is reacted with a compound having an isocyanate group and a reactive silicon group, for example, but it is not limited thereto.

Examples of the compound having an isocyanate group and a reactive silicon group to be used for Method III include γ-isocyanatopropyltrimethoxysilane, γ-isocyanatopropylmethyldimethoxysilane, γ-isocyanatopropyltriethoxysilane, γ-isocyanatopropylmethyldiethoxysilane, isocyanatomethyltrimethoxysilane, isocyanatomethyltriethoxysilane, isocyanatomethyldimethoxymethylsilane, and isocyanatomethyldiethoxymethylsilane, but not limited thereto.

In the case of a silane compound in which three hydrolyzable groups are bonded to one silicon atom such as trimethoxysilane and the like, a disproportionation reaction may sometimes proceed. When a disproportionation reaction proceeds, an unstable compound such as dimethoxysilane is produced to make the handling difficult. However, such disproportionation reaction does not proceed with γ-mercaptopropyltrimethoxysilane and γ-isocyanatopropyltrimethoxysilane. Therefore, when a group in which three hydrolyzable groups are bonded to one silicon atom, such as trimethoxysilyl group and the like, is used as a silicon-containing group, the method of Method II or Method III is preferably used.

On the other hand, a silane compound represented by the following General Formula (2) does not have any progress of a disproportionation reaction.

H-(SIR²₂O)mSiR²₂-R³-SiX₃ (2)

In General Formula (2), X is as defined in General Formula (1). Each R² in the number of 2m+2 is independently the same as R¹ of General Formula (1). R³ is a substituted or unsubstituted divalent hydrocarbon group having 1 to 20 carbon atoms. m represents an integer of 0 to 19.

Accordingly, when a group in which three hydrolyzable groups are bonded to one silicon atom is introduced by Method I, it is preferable to use a silane compound represented by General Formula (2). From the viewpoint of obtainability and cost, it is preferable that each R² in the number of 2m+2 is independently a hydrocarbon group having 1 to 20 carbon atoms, and it is more preferably a hydrocarbon group having 1 to 8 carbon atoms, and particularly preferably a hydrocarbon group having 1 to 4 carbon atoms. R³ is preferably a divalent hydrocarbon group having 1 to 12 carbon atoms, more preferably a divalent hydrocarbon group having 2 to 8 carbon atoms, and particularly preferably a divalent hydrocarbon group having 2 carbon atoms. m is most preferably 1.

Examples of the silane compound represented by General Formula (2) include 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

Between the above Method I and Method III, a method in which an organic polymer having a hydroxy group on the terminal is reacted with a compound having an isocyanate group and a reactive silicon group is preferable since high conversion ratio is obtained in a relatively short reaction time. Furthermore, from the viewpoint that the organic polymer having a reactive silicon group obtained by Method I has lower viscosity than an organic polymer having a reactive silicon group obtained by Method III and allows obtainment of a curable composition with good workability according to use of the organic polymer, and also the organic polymer having a reactive silicon group obtained by Method II has strong malodor based on mercaptosilane, Method I is particularly preferable.

Main chain structure of (A) the polyoxyalkylene polymer having a reactive silicon group is preferably a repeat unit represented by the following General Formula (3).

-R⁴-O- (3)

In General Formula (3), R⁴ is a linear or branched alkylene group having 1 to 14 carbon atoms, and number of carbon atoms of 2 to 4 is more preferable.

Examples of the repeat unit represented by General Formula (3) include -CH₂O-, -CH₂CH₂O-, -CH₂CH(CH₃)O-, -CH₂CH(C₂H₅)O-,-CH₂C(CH₃)₂O-, and -CH₂CH₂CH₂CH₂O-.

The main chain structure of the polyoxyalkylene polymer may be formed of only one kind of repeat unit or two or more kinds of repeat units. Particularly, when the curable composition is used as a sealant and the like, the main chain structure of the component (A) is preferably a polyoxypropylene polymer which has an amorphous property and also relatively low viscosity.

Examples of the synthetic method of the polyoxyalkylene polymer include a polymerization method using an alkali catalyst such as KOH and the like, the polymerization method shown in JP S61-215623 A, which uses a transition metal compound-porphyrin complex catalyst such as a complex obtained by reaction of an organic aluminum compound and porphyrin, the polymerization methods shown in JP S46-27250 B, JP S59-15336 B, US Patent No. 3278457, US Patent No. 3278458, US Patent No. 3278459, US Patent No. 3427256, US Patent No. 3427334, US Patent No. 3427335 and the like, which use a double metal cyanide complex catalyst (e.g., zinc hexacyanocobaltate glyme complex catalyst), the polymerization method shown in JP H10-273512 A, which uses a catalyst containing a polyphosphagen salt, and the polymerization method shown in JP H11-060722 A, which uses a catalyst containing a phosphagen compound, but are not limited thereto.

Among them, the polymerization method in which alkylene oxide is reacted with an initiator in the presence of a double metal cyanide complex catalyst is preferable in that a polymer with narrow molecular weight distribution can be obtained.

Examples of the double metal cyanide complex catalyst include Zn₃[Co(CN)₆]₂ (zinc hexacyanocobaltate complex). Furthermore, a catalyst in which alcohol and/or ether is coordinated as an organic ligand to the double metal cyanide complex catalyst can also be used.

As for the initiator, a compound having at least two active hydrogen groups is preferable. Examples of the compound having an active hydrogen include polyhydric alcohol such as ethylene glycol, diethylene glycol, or propylene glycol, and a linear and/or branched polyether compound with number average molecular weight of 500 to 20,000.

Examples of the alkylene oxide include ethylene oxide, propylene oxide, and isobutylene oxide.

As for the polyoxyalkylene polymer having a reactive silicon group, a polymer suggested in each publication of JP S45-36319 B, JP S46-12154 B, JP S50-156599 A, JP S54-6096 A, JP S55-13767 A, JP S55-13468 A, JP S57-164123 A, JP H03-2450 B, US Patent No. 3632557, US Patent No. 4345053, US Patent No. 4366307, US Patent No. 4960844 and the like can be mentioned. Furthermore, the polyoxyalkylene polymer having a reactive silicon group with a number average molecular weight of 6,000 or more and a molecular weight distribution (Mw/Mn) of 1.6 or less or 1.3 or less, i.e., narrow molecular weight distribution at high molecular weight, as proposed in each publication of JP S61-197631 A, JP S61-215622 A, JP S61-215623 A, JP S61-218632 A, JP H03-72527 A, JP H03-47825 A, and JP H08-231707 A can be mentioned. The above polyoxyalkylene polymer having a reactive silicon group may be used either singly or in combination of two or more kinds thereof.

As for the polyoxyalkylene polymer which constitutes the main chain skeleton of the component (A), a polymer exhibiting relatively low glass transition temperature is preferable. When the component (A) which has such polyoxyalkylene polymer as a main chain skeleton is used, a curable composition capable of forming of a cured product with excellent cold resistance can be easily obtained.

The glass transition temperature of the polyoxyalkylene polymer which constitutes the main chain skeleton of the component (A) is not particularly limited, but it preferably not more than 20°C, more preferably not more than 0°C, and particularly preferably not more than -20°C. When the glass transition temperature is more than 20°C, the viscosity of the curable composition becomes high in winter or cold region, and the workability is degraded in some cases. Furthermore, the flexibility of the cured product may decrease and the elongation is degraded in some cases. The glass transition temperature is a value that is obtained by DSC measurement.

Furthermore, among the polyoxyalkylene polymers which constitute the main chain skeleton of the component (A), a polyoxypropylene polymer is most preferable.

(A) The polyoxyalkylene polymer having a reactive silicon group may be any one of linear type and branched type. The number average molecular weight (Mn) of (A) the polyoxyalkylene polymer having a reactive silicon group is preferably 1,000 to 100,000, more preferably 2,000 to 50,000, and particularly preferably 3,000 to 30,000. The number average molecular weight is a value measured by GPC (using polystyrene as a reference). If the number average molecular weight is less than 1,000, there may be a case in which elongation of a cured product is deteriorated. If the number average molecular weight is more than 100,000, the curable composition has high viscosity so that operations for producing a laminate may become difficult or complicated. The molecular weight distribution (Mw/Mn) of the polyoxyalkylene polymer having a reactive silicon group, which is measured by GPC, is preferably 1.8 or less, more preferably 1.5 or less, and even more preferably 1.4 or less.

To obtain a rubber-like cured product showing low elastic modulus with high strength and high elongation, the number of the reactive silicon group contained in the component (A) is 1 or more, more preferably 1.1 to 5, even more preferably 1.1 to 3, and most preferably 1.1 to 2, on average in one molecule. If the number of the reactive silicon group contained in the molecule is less than 1 on average, it may become difficult to have good curing of the curable composition, or it may become difficult to obtain a cured product with good rubber elasticity behavior.

The reactive silicon group may be present on the main chain terminal or the side chain terminal of the polyoxyalkylene polymer, or both of them. Particularly, when the reactive silicon group is present only on the main chain terminal, a rubber-like cured product showing high strength, high elongation and low elastic modulus is easily obtained, since the effective network length in the finally-formed cured product becomes long.

As the component (A), (A2) a polyoxyalkylene polymer having a reactive silicon group and containing a urethane bond and/or a urea bond can also be used.

The urethane bond (-NR⁸-C (=O)-O-) and/or urea bond (-NR⁸-C(=O)-NR⁸-) is a binding group which includes an amide binding moiety represented by the following General Formula (4).

-

NR⁸-C(=O)- (4)

Herein, R⁸ in General Formula (4) represents an organic group or a hydrogen atom.

The amide binding moiety represented by General Formula (4) can be formed by a reaction of an isocyanate group and a hydroxy group, a reaction of an isocyanate group and an amino group, a reaction of an isocyanate group and an isocyanate group, or a reaction of an isocyanate group and a mercapto group and the like. In addition, a bond formed by a reaction of an amide binding moiety containing active hydrogen atom in R⁸ in General Formula (4), and an isocyanate group is also included in the amide binding moiety represented by General Formula (4).

As an industrially easy production method of (A2) the polyoxyalkylene polymer having a reactive silicon group and containing a urethane bond and/or a urea bond, a method including reacting an excess polyisocyanate compound with a polyoxyalkylene polymer having an active hydrogen-containing group on the terminal to give a polyurethane polymer having an isocyanate group on the terminal, and then or simultaneously, reacting the whole or a part of the isocyanate group on the terminal with W group of the silicon compound represented by the following General Formula (5) can be mentioned, for example.

W-R⁹- SiR¹₃₋ₐXₐ (5)

In General Formula (5), R¹, X and a are as defined in General Formula (1). R⁹ represents a divalent organic group, and more preferably a hydrocarbon group having 1 to 20 carbon atoms. W is an active hydrogen-containing group selected from a hydroxy group, a carboxy group, a mercapto group and an amino group (primary or secondary).

Examples of the silicon compound represented by General Formula (5) include a silane compound containing an amino group, a silane compound containing a hydroxy group, and a silane compound containing a mercapto group.

Examples of the silane compound containing an amino group include γ-aminopropyltrimethoxysilane, N-(β-aminoethyl)-γ-aminopropyltrimethoxysilane, (N-phenyl)-γ-aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane.

Examples of the silane compound containing a hydroxyl group include γ-hydroxypropyltrimethoxysilane.

Examples of the silane compound containing a mercapto group include γ-mercaptopropyltrimethoxysilane.

Furthermore, as described in JP H06-211879 A (US Patent No. 5364955), JP H10-53637 A (US Patent No. 5756751), JP H10-204144 A (EP 0831108), JP 2000-169544 A, and JP 2000-169545 A, a Michael addition reaction product of various α,β-unsaturated carbonyl compounds and a primary amino group-containing silane compound, and a Michael addition reaction product of various (meth)acryloyl group-containing silane compounds and a primary amino group-containing compound can also be used as a silicon compound represented by General Formula (7).

Examples of the literature relating to the above production method include JP S46-12154 B (US Patent No. 3632557), JP S58-109529 A (US Patent No. 4374237), JP S62-13430 A (US Patent No. 4645816), JP H08-53528 A (EP 0676403), JP H10-204144 A (EP 0831108), JP 2003-508561 W (US Patent No. 6197912), JP H06-211879 A (US Patent No. 5364955), JP H10-53637 A (US Patent No. 5756751), JP H11-100427 A, JP 2000-169544 A, JP 2000-169545 A, JP 2002-212415 A, JP 3313360 B, US Patent No. 4067844, US Patent No. 3711445, JP 2001-323040 A and the like.

Furthermore, as for (A2) the polyoxyalkylene polymer having a reactive silicon group and containing a urethane bond and/or a urea bond, a polymer produced by reacting an organic polymer having an active hydrogen-containing group on the terminal with a reactive silicon group-containing isocyanate compound represented by General Formula (6) can also be mentioned, for example.

O=C=N-R⁹-SiR¹₃₋ₐXₐ (6)

Herein, R⁹, R¹, X, and a in General Formula (6) are as defined above.

Examples of the reactive silicon group-containing isocyanate compound represented by General Formula (6) include γ -trimethoxysilylpropylisocyanate, γ-triethoxysilylpropylisocyanate, γ-methyldimethoxysilylpropylisocyanate, γ-methyldiethoxysilylpropylisocyanate, trimethoxysilylmethylisocyanate, triethoxymethylsilylmethylisocyanate, dimethoxymethylsilylmethylisocyanate, and diethoxymethylsilylmethylisocyanate, but not limited thereto. Furthermore, as described in JP 2000-119365 A (US Patent No. 6046270), a compound obtained by reacting a silicon compound of General Formula (5) with an excess amount of the above polyisocyanate compound can also be used as a reactive silicon group-containing isocyanate compound represented by General Formula (6).

Examples of the literature relating to the above production method include JP H11-279249 A (US Patent No. 5990257), JP 2000-119365 A (US Patent No. 6046270), JP S58-29818 A (US Patent No. 4345053), JP H03-47825 A (US Patent No. 5068304), JP H11-60724 A, JP 2002-155145 A, JP 2002-249538 A, WO 03/018658, WO 03/059981 and the like.

Examples of the organic polymer having an active hydrogen-containing group on the terminal include a polyoxyalkylene polymer having a hydroxy group on the terminal (polyether polyol), polyacrylic polyol, polyester polyol, a saturated hydrocarbon polymer having a hydroxy group on the terminal (polyolefin polyol), polythiol compound, polyamine compound and the like. Of these, polyether polyol, polyacrylic polyol, and polyolefin polyol are preferable since the glass transition temperature of an organic polymer to be obtained is relatively low, and a cured product to be obtained is superior in cold resistance. Particularly, polyether polyol is particularly preferable since an organic polymer to be obtained shows low viscosity and good workability, and the curable composition has also good depth curability and the cured product has good adhesiveness.

The method for producing polyether polyol is not particularly limited. Polyether polyol having at least 0.7 hydroxy group per molecular terminal on entire molecule average is preferable. Examples of polyether polyol include a polyoxyalkylene polymer produced by using a conventional alkali metal catalyst, a polyoxyalkylene polymer produced by reacting an initiator such as a polyhydroxy compound having at least two hydroxy groups and the like with alkylene oxide in the presence of a double metal cyanide complex catalyst or cesium catalyst, and the like.

Of the above-mentioned polymerization methods, a polymerization method using a double metal cyanide complex catalyst is preferable since a polyoxyalkylene polymer having a lower degree of unsaturation, narrow molecular weight distribution (Mw/Mn), lower viscosity, high acid resistance, and high weather resistance can be obtained.

Examples of the polyisocyanate compound include aromatic polyisocyanate and aliphatic polyisocyanate.

Examples of the aromatic polyisocyanate include toluene (tolylene) diisocyanate, diphenylmethane diisocyanate, and xylylene diisocyanate.

Examples of the aliphatic polyisocyanate include isophorone diisocyanate and hexamethylene diisocyanate.

(A2) The polyoxyalkylene polymer having a reactive silicon group and containing a urethane bond and/or a urea bond is generally referred to silylated urethane, silylated polyurethane, SPUR, or the like, and it has been already industrially produced.

(A2) The polyoxyalkylene polymer having a reactive silicon group and containing a urethane bond and/or a urea bond can be obtained as Desmoseal S series (manufactured by Bayer), SPUR+ series (manufactured by Momentive), or GENIOSIL STP-E10, GENIOSIL STP-E15, GENIOSIL STP-E30, and GENIOSIL STP-E35 (all manufactured by Wacker).

Preferred mode of the component (A) is a polyoxyalkylene polymer which has, on average in one molecule, 1.1 to 5 groups of at least one silicon-containing group selected from a group consisting of a trimethoxysilyl group, a triethoxysilyl group, a dimethoxymethylsilyl group, and a (methoxymethyl)dimethoxysilyl group, and number average molecular weight of 1,000 to 100,000, and/or a polyoxyalkylene polymer containing a urethane bond and/or a urea bond. Furthermore, with regard to the descriptions of such preferred mode, limitation (i.e., modifying words) of the silicon-containing group and number average molecular weight is directed to modification of both the polyoxyalkylene polymer and polyoxyalkylene polymer containing a urethane bond and/or a urea bond.

More preferred mode of the component (A) is a polyoxyalkylene polymer which has, on average in one molecule, 1.1 to 3 groups of at least one silicon-containing group selected from a group consisting of a trimethoxysilyl group, a (methoxymethyl)dimethoxysilyl group, and a dimethoxymethylsilyl group, and number average molecular weight of 2,000 to 50,000.

Even more preferred mode of the component (A) is a polyoxyalkylene polymer which has, on average in one molecule, 1.1 to 2 dimethoxymethylsilyl groups, and number average molecular weight of 3,000 to 30,000.

Most preferred mode of the component (A) is a polyoxypropylene polymer which has, on average in one molecule, 1.1 to 2 dimethoxymethylsilyl groups, and number average molecular weight of 3,000 to 30,000.

### [(B) Epoxy plasticizer]

The curable composition contains (B) an epoxy plasticizer. (B) The epoxy plasticizer is (B1) epoxyhexahydrophthalic acid dialkyl ester and/or (B2) epoxidized fatty acid alkyl ester, and (B) the epoxy plasticizer is added for the purpose of adjusting viscosity and improving workability of the curable composition, and improving adhesiveness between a cured product of the curable composition and a coating material. Hereinbelow, (B) the epoxy plasticizer, (B1) epoxyhexahydrophthalic acid dialkyl ester, and (B2) epoxidized fatty acid alkyl ester are also described as component (B), component (B1), and component (B2), respectively.

As for the component (B1), 4,5-epoxyhexahydrophthalic acid dialkyl ester is preferable, and an alkyl group (b1) of the alkyl ester moiety included in the component (B1) is a linear or branched alkyl group having 1 to 20 carbon atoms which may be epoxidized.

Specific examples of the component (B1) include 4,5-epoxyhexahydrophthalic acid di-2-ethylhexyl ester and 4,5-epoxyhexahydrophthalic acid di-9,10-epoxystearyl ester.

The component (B1) can be obtained as a commercial product such as SANSO CIZER E-PS or SANSO CIZER E-PO (all manufactured by New Japan Chemical Co., Ltd.).

As for the component (B2), alkyl ester of epoxidized fatty acid having 3 to 30 carbon atoms is preferable. An alkyl group (b2) of the alkyl ester moiety included in the component (B2) is a linear or branched alkyl group having 1 to 20 carbon atoms.

Specific examples of the component (B2) include epoxidized fatty acid butyl ester and epoxidized fatty acid 2-ethylhexyl ester.

The component (B2) can be obtained as a commercial product such as SANSO CIZER E-4030 or SANSO CIZER E-6000 (all manufactured by New Japan Chemical Co., Ltd.).

Molecular weight of the component (B) is preferably 90 to 1000, more preferably 150 to 900, and even more preferably 300 to 800.

The component (B) may be used either singly or in combination of two or more kinds thereof.

Use amount of the component (B) is 30 to 100 parts by weight, preferably 35 to 80 parts by weight, and more preferably 35 to 50 parts by weight relative to 100 parts by weight of the component (A). If it is less than 30 parts by weight, there is a tendency that lower adhesiveness between a cured product and a coating material is caused. On the other hand, if it is more than 100 parts by weight, there is a tendency that the storage stability of the curable composition is deteriorated.

### <(C) Antioxidant>

The curable composition contains (C) an antioxidant. (C) The antioxidant is added for the purpose of improving thermal degradation resistance of the curable composition. Hereinbelow, (C) the antioxidant is also described as a component (C).

Examples of the component (C) include a hindered phenol-based antioxidant, a monophenol-based antioxidant, a bisphenol-based antioxidant, and a polyphenol-based antioxidant, but a hindered phenol-based antioxidant is particularly preferable.

Specific examples of the component (C) include IRGANOX 245, IRGANOX 1010, and IRGANOX 1035 (all manufactured by BASF Japan), and ADK STAB AO-20, ADK STAB AO-50, ADK STAB AO-60, and ADK STAB AO-330 (all manufactured by ADEKA Corporation). They are all obtainable as a commercially available product.

The component (C) may be used either singly or in combination of two or more kinds thereof.

Use amount of the component (C) is 2 to 10 parts by weight relative to 100 parts by weight of the component (A). If it is less than 2 parts by weight, there is a tendency that the thermal degradation resistance is not obtained. On the other hand, if it is more than 10 parts by weight, there is a tendency that lower adhesiveness between a cured product and a coating material is caused.

### [Plasticizer]

To the curable composition, a plasticizer may be added for the purpose of adjusting the viscosity and improving the workability of the curable composition, and also adjusting the mechanical properties of a cured product of the curable composition.

Examples of the plasticizer include orthophtalic acid ester, isophthalic acid ester, terephthalic acid ester, cyclohexane dicarboxylic acid ester, aliphatic polyhydric carboxylic acid ester, unsaturated fatty acid ester, alkyl sulfonic acid phenyl ester (available as product name of Mesamoll, manufactured by LANXESS AG), phosphoric acid ester, trimellitic acid ester, chlorinated paraffin, hydrocarbon oil, and process oil.

Examples of the orthophthalic acid ester include phthalic acid dimethyl ester, phthalic acid diethyl ester, phthalic acid di-n-butyl ester, phthalic acid diisobutyl ester, phthalic acid di-n-hexyl ester, phthalic acid di-2-ethylhexyl ester, phthalic acid di-n-octyl ester, phthalic acid diisononyl ester, phthalic acid dinonyl ester, phthalic acid diisodecyl ester, phthalic acid diisoundecyl ester, and phthalic acid benzyl butyl ester.

Examples of the isophthalic acid ester include isophthalic acid diethyl ester, isophthalic acid di-n-butyl ester, isophthalic acid diisobutyl ester, isophthalic acid di-n-hexyl ester, isophthalic acid di-n-octyl ester, isophthalic acid diisooctyl ester, isophthalic acid di-2-ethylhexyl ester (available as product name of DOIP, manufactured by CG Ester Corporation), isophthalic acid di-n-nonyl ester, isophthalic acid diisononyl ester, and isophthalic acid diisodecyl ester.

Examples of the terephthalic acid ester include terephthalic acid diethyl ester, terephthalic acid di-n-butyl ester, terephthalic acid diisobutyl ester, terephthalic acid di-n-hexyl ester, terephthalic acid di-n-octyl ester, terephthalic acid diisooctyl ester, terephthalic acid di-2-ethylhexyl ester (available as product name of EASTMAN 168, manufactured by EASTMAN), terephthalic acid di-n-nonyl ester, terephthalic acid diisononyl ester, and terephthalic acid diisodecyl ester.

Among them, phthalic acid di-2-ethylhexyl ester, phthalic acid diisononyl ester, phthalic acid diisodecyl ester, isophthalic acid di-2-ethylhexyl ester, and terephthalic acid di-2-ethylhexyl ester are more preferable from the viewpoint of availability.

Examples of the cyclohexane dicarboxylic acid ester include 1,2-cyclohexane dicarboxylic acid diisononyl ester (available as product name of Hexamoll DINCH, manufactured by BASF), 1,3-cyclohexane dicarboxylic acid diethyl ester, 1,3-cyclohexane dicarboxylic acid di-n-butyl ester, 1,3-cyclohexane dicarboxylic acid diisobutyl ester, 1,3-cyclohexane dicarboxylic acid di-n-hexyl ester, 1,3-cyclohexane dicarboxylic acid di-n-octyl ester, 1,3-cyclohexane dicarboxylic acid diisooctyl ester, 1,3-cyclohexane dicarboxylic acid di-2-ethylhexyl ester, 1,3-cyclohexane dicarboxylic acid di-n-nonyl ester, 1,3-cyclohexane dicarboxylic acid diisononyl ester, 1,3-cyclohexane dicarboxylic acid diisodecyl ester, 1,4-cyclohexane dicarboxylic acid diethyl ester, 1,4-cyclohexane dicarboxylic acid di-n-butyl ester, 1,4-cyclohexane dicarboxylic acid diisobutyl ester, 1,4-cyclohexane dicarboxylic acid di-n-hexyl ester, 1,4-cyclohexane dicarboxylic acid di-n-octyl ester, 1,4-cyclohexane dicarboxylic acid diisooctyl ester, 1,4-cyclohexane dicarboxylic acid di-2-ethylhexyl ester, 1,4-cyclohexane dicarboxylic acid di-n-nonyl ester, 1,4-cyclohexane dicarboxylic acid diisononyl ester, and 1,4-cyclohexane dicarboxylic acid diisodecyl ester.

Examples of the aliphatic polyhydric carboxylic acid ester include adipic acid dimethyl ester, adipic acid dioctyl ester, sebacic acid dioctyl ester, sebacic acid dibutyl ester, succinic acid diisodecyl ester, and acetyl citric acid tributyl ester.

Examples of the unsaturated fatty acid ester include butyl oleate.

Examples of the phosphoric acid ester include tricresyl phosphate and tributyl phosphate.

Examples of the hydrocarbon oil include alkyl diphenyl and partially hydrogenated terphenyl.

In addition, a high molecular weight plasticizer can be used. When a high molecular weight plasticizer is used, the initial physical properties can be maintained for a long period of time as compared to use of a low molecular weight plasticizer. Furthermore, when a high molecular weight plasticizer is used, the drying property of a coating material (i.e., application property of paint) can be improved if a cured product to be obtained is applied with an alkyd coating material.

Examples of the high molecular weight plasticizer include a vinyl polymer, an ester compound, a polyester plasticizer, polyether polyol, polyether polyol derivatives, and a polystyrene plasticizer.

The vinyl polymer is a polymer obtained by polymerization of various vinyl monomers based on various methods. The vinyl polymer can be a homopolymer of a single monomer, or a copolymer of two or more kinds of a monomer.

Examples of the ester compound include an ester compound of aliphatic alcohol having 2 or more alcoholic hydroxyl groups such as diethylene glycol dibenzoate, triethylene glycol dibenzoate, and pentaerythritol ester.

Examples of the polyester plasticizer include a polyester plasticizer obtained from a dibasic acid and a dihydric alcohol, for example. Examples of the dibasic acid include sebacic acid, adipic acid, azelaic acid, and phthalic acid. Examples of the dihydric alcohol include ethylene glycol, diethylene glycol, triethylene glycol, propylene glycol, and dipropylene glycol.

Examples of the polyether polyol include polyethylene glycol, polypropylene glycol, and polytetramethylene glycol. Number average molecular weight of the polyether polyol is preferably 500 or more. Examples of the polyether polyol derivatives include those polyether polyols of which hydroxyl groups are modified into an ester group, an ether group, or the like.

Examples of the polystyrene plasticizer include polystyrene and poly-α-methylstyrene.

Furthermore, polybutadiene, polybutene, polyisobutylene, butadiene-acrylonitrile, polychloroprene and the like can also be mentioned.

Polyether is preferable in that, when it is blended as a plasticizer, the surface curing property and depth curing property are improved, and, in particular, polypropylene glycol is more preferable.

From the viewpoint of compatibility, weather resistance, and heat resistance, the vinyl polymer is preferable. Of the vinyl polymers, acrylic polymers and/or (meth)acrylate polymers are preferable, and acrylate polymers such as polyacrylic acid alkyl ester and the like are more preferable. The synthetic method of the polymer is preferably a living radical polymerization method, and more preferably an atom transfer radical polymerization, since the molecular weight distribution is narrow and low viscosity can be achieved. In particular, use of a polymer obtained by continuous bulk polymerization of the alkyl acrylate-based monomer at a high temperature and high pressure as described in JP 2001-207157 A (for example, available as ARUFON, manufactured by Toagosei Co., Ltd.), i.e., so-called SGO process, is most preferable.

The number average molecular weight of the high molecular weight plasticizer is preferably 500 to 15,000, more preferably 800 to 10,000, even more preferably 1,000 to 8,000, particularly preferably 1,000 to 5,000, and most preferably 1,000 to 3,000. If the number average molecular weight is less than 500, the plasticizer flows out over time due to heat or rainfall, and thus there may be a case in which the initial physical properties cannot be maintained over a long period of time. Furthermore, if the number average molecular weight is more than 15,000, the viscosity becomes high, and the workability is degraded.

While the molecular weight distribution (Mw/Mn) of the high molecular weight plasticizer is not particularly limited, it is preferably as narrow as possible, and less than 1.80 is preferable, not more than 1.60 is more preferable, not more than 1.50 is still more preferable, not more than 1.40 is particularly preferable, and not more than 1.30 is most preferable.

The number average molecular weight of the high molecular weight plasticizer can be measured by a GPC method in the case of a vinyl polymer, and by terminal group analysis in the case of a polyether polymer. Furthermore, the molecular weight distribution is measured by a GPC method (based on polystyrene as reference).

The high molecular weight plasticizer may or may not have a reactive silicon group. When the high molecular weight plasticizer has a reactive silicon group, the high molecular weight plasticizer acts as a reactive plasticizer, and prevents transfer of plasticizer from the cured product. When the high molecular weight plasticizer has a reactive silicon group, the number of reactive silicon group per molecule is preferably not more than 1, and more preferably not more than 0.8 on average.

Among the high molecular weight plasticizer, those having compatibility with the component (A) are preferable, polyether or a vinyl polymer is preferable, polyether is more preferable, a polyoxyalkylene polymer is even more preferable, and a polyoxypropylene polymer is most preferable.

The plasticizer may be used either singly or in combination of two or more kinds thereof.

Use amount of the plasticizer is preferably 5 to 100 parts by weight, more preferably 10 to 80 parts by weight, and even more preferably 10 to 50 parts by weight relative to 100 parts by weight of the component (A).

Furthermore, the total use amount of the component (B) and the plasticizer is preferably 35 to 200 parts by weight, more preferably 35 to 100 parts by weight, even more preferably 35 to 80 parts by weight, and most preferably 35 to 60 parts by weight relative to 100 parts by weight of the component (A).

### [Curing catalyst]

For the curable composition, a curing catalyst can be used for the purpose of accelerating the curing of the component (A) .

As the curing catalyst, a tetravalent organotin compound, carboxylic acid, a metal salt of carboxylic acid, an amine compound, and a metal compound other than tin compound can be mentioned.

Examples of the tetravalent organotin compound include a dimethyl tin compound, a dibutyl tin compound, and a dioctyl tin compound.

Examples of the dimethyl tin compound include dimethyl tin diacetate and dimethyl tin bis(acetylacetonate).

Examples of the dibutyl tin compound include dibutyl tin dilaurate, dibutyl tin diacetate, dibutyl tin bis(2-ethylhexanoate), dibutyl tin di octanoate, dibutyl tin phthalate, dibutyl tin maleate, dibutyl tin bis(methyl maleate), dibutyl tin bis(ethyl maleate), dibutyl tin bis(butyl maleate), dibutyl tin bis(n-octyl maleate), dibutyl tin bis(isooctyl maleate), dibutyl tin bis(tridecyl maleate), dibutyl tin bis(benzyl maleate), dibutyl tin dimethoxide, dibutyl tin diphenoxide, dibutyl tin bis(nonylphenoxide), dibutyl tin bis(acetylacetonate), dibutyl tin bis(ethylacetoacetonate), dibutyl tin bistriethoxysilicate, and a reaction product between dibutyl tin oxide and an ester compound such as dioctyl phthalate, diisodecyl phthalate, or methyl maleate.

Examples of the dioctyl tin compound include dioctyl tin diacetate, dioctyl tin distearate, dioctyl tin dilaurate, dioctyl tin bis(ethyl maleate), dioctyl tin bis(n-octyl maleate), dioctyl tin bis(isooctyl maleate), dioctyl tin bis(acetylacetonate), dioctyl tin bis(triethoxysilicate), and a reaction product between dioctyl tin oxide and an ester compound such as dioctyl phthalate, diisodecylphthalate, or methyl maleate.

Examples of the carboxylic acid include 2-ethylhexanoic acid and versatic acid.

Examples of the metal salt of carboxylic acid include divalent tin carboxylic acid such as tin octylate, tin 2-ethylhexanoate, tin naphthenate, tin stearate, tin versaticate, and tin neodecanoate; and lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, and iron carboxylate. In addition, a reaction product and/or a mixture of divalent tin carboxylic acid and amine compound such as laurylamine can be mentioned.

Examples of the amine compound include laurylamine, diethylaminopropylamine, 1-(o-tolyl)biguanide, guanidine, 1-phenylguanidine, diphenylguanidine, and 1,8-diazabicyclo(5,4,0)undecene-7 (DBU).

Examples of the metal compound other than tin include titanium compounds such as tetrabutyl titanate, tetrapropyl titanate, titanium tetrakis(acetylacetonate), diisopropoxytitanium bis(acetylacetonate), and diisopropoxytitanium bis(ethyl acetoacetate); organoaluminum compounds such as aluminum tris(acetylacetonate), aluminum tris(ethyl acetoacetate), and diisopropoxyaluminum ethyl acetoacetate; and zirconium compounds such as zirconium tetrakis(acetylacetonate).

The curing catalyst may be used either singly or in combination of two or more kinds thereof.

As the curing catalyst, the tetravalent organotin compound is preferred, and a dibutyl tin compound and a dioctyl tin compound are more preferred because the strength of a cured product is quickly exhibited.

Use amount of the curing catalyst is preferably 0.05 to 20 parts by weight, more preferably 1 to 10 parts by weight, even more preferably 1 to 7 parts by weight, and most preferably 1.5 to 5 parts by weight relative to 100 parts by weight of the component (A). If the amount is less than 0.05 parts by weight, the curing rate tends to decrease. On the other hand, if the amount exceeds 20 parts by weight, the curing rate is high so that determination of curing conditions may be required for obtaining a favorable cured product.

### [Filler]

In the curable composition, a filler may be used for the purpose of improving the workability of the curable composition, and adjusting mechanical properties of a cured product like hardness, tensile strength, and elongation. As an example of the filler, an organic filler or an inorganic filler may be used.

Examples of the inorganic filler include silicic acid (silica) based, silicate (clay) based, carbon black, carbonate salt, and other inorganic fillers.

Examples of the silicic acid (silica) based include synthetic silica such as precipitated silica, gel method silica, dry type silica, colloidal silica, or fumed silica; crystalline silica such as quartz or crystobalite; quartz glass (molten silica); and noncrystalline silica such as diatomaceous earth or white carbon.

Examples of the silicate (clay) base include kaolin, calcined clay, talc, white mica, wollastonite, serpentine, and pyrophyllite.

Examples of the carbonate salt include calcium carbonate, magnesium carbonate, and dolomite. Examples of the calcium carbonate include ground calcium carbonate and precipitated calcium carbonate. Examples of the precipitated calcium carbonate include light calcium carbonate with major diameter of 1 µm or more and colloidal calcium carbonate with average particle size of 1 µm or less. Furthermore, surface treated calcium carbonate, i.e., those obtained by surface treatment of above calcium carbonates, can also be used. Examples of a surface treating agent include fatty acid like stearic acid, fatty acid ester, modified fatty acid, resin acid like rosin, paraffin wax, polyethylene wax, and a cationic surfactant.

Examples of other inorganic filler include barium sulfate, titanium oxide, aluminum oxide, ferric oxide, zinc white (zinc oxide), activated zinc white, bentonite, shirasu balloon, and glass microballoon.

Examples of the organic filler include an organic microballoon of phenolic resin or vinylidene chloride resin, and resin powders such as PVC powder and PMMA powder.

When it is desired to obtain a cured product with high strength, it is more preferable to mainly use a filler selected from fumed silica, precipitated silica, crystalline silica, quartz glass (molten silica), dolomite, silicate (clay) based, carbon black, surface treated calcium carbonate, and active zinc white.

When it is desired to obtain a cured product with high elongation break by having low strength, it is more preferable to mainly use a filler selected from titanium oxide, ground calcium carbonate, magnesium carbonate, talc, ferric oxide, zinc white (zinc oxide), and shirasu balloon.

Furthermore, the effect of improving the strength at break, elongation at break, and adhesiveness of a cured product increases as the specific surface area of calcium carbonate increases. When calcium carbonate is used, it is preferable to use in combination surface treated colloidal calcium carbonate and ground calcium carbonate with large particle diameter. Particle diameter of the surface treated colloidal calcium carbonate is preferably or 0.5 µm or less. The surface treatment is preferably a treatment using fatty acid or fatty acid salt. Furthermore, particle diameter of the ground calcium carbonate with large particle diameter is preferably or 1 µm or more. The ground calcium carbonate may be either surface-treated or not surface-treated.

The filler may be used either singly or in combination of two or more kinds thereof.

Among the fillers, from the viewpoint of having both the workability of a curable composition to be obtained and physical properties of a cured product, it is preferable to use calcium carbonate, and combined use of surface treated colloidal calcium carbonate and ground calcium carbonate is more preferable.

Use amount of the filler is preferably 10 to 500 parts by weight, more preferably 50 to 400 parts by weight, and even more preferably 100 to 300 parts by weight relative to 100 parts by weight of the component (A).

### [Thixotropic agent]

In the curable composition, a thixotropic agent may be used for preventing sagging and improving workability.

Examples of the thixotropic agent include polyamide wax, hydrogenated castor oil derivatives, and metal soap (e.g., calcium stearate, aluminum stearate, barium stearate and the like). When a rubber powder having a particle size of 10 to 500 µm described in JP H11-349916 A or an organic fiber described in JP 2003-155389 A is used, a curable composition showing high thixotropy and good workability can be obtained.

The thixotropic agent may be used either singly or in combination of two or more kinds thereof.

Use amount of the thixotropic agent is preferably 0.1 to 20 parts by weight, more preferably 0.5 to 15 parts by weight, and even more preferably 1 to 10 parts by weight relative to 100 parts by weight of the component (A).

### [Light stabilizer]

In the curable composition, a light stabilizer may be used for the purpose of preventing photooxidation deterioration of a cured product.

Examples of the light stabilizer include a benzotriazole-based light stabilizer, a hindered amine-based light stabilizer, a benzoate-based light stabilizer and the like, and a hindered amine-based light stabilizer is particularly preferable.

Examples of the hindered amine-based light stabilizer include Tinuvin 770, Tinuvin 770DF, Tinuvin 765, Tinuvin 622LD, Tinuvin 744, Tinuvin 292, Tinuvin 144, CHIMASSORB 944FDL, and CHIMASSORB 2020 (all the above manufactured by BASF Japan Ltd.), and ADK STAB LA-52, ADK STAB LA-57, ADK STAB LA-62, ADK STAB LA-63P, ADK STAB LA-68, and ADK STAB LA-67 (all the above manufactured by ADEKA Corporation), and they can be obtained as a commercially available product.

The light stabilizer may be used either singly or in combination of two or more kinds thereof.

Use amount of the light stabilizer is preferably 0.1 to 10 parts by weight, and more preferably 0.2 to 5 parts by weight relative to 100 parts by weight of the component (A).

In the curable composition, an ultraviolet absorber may be used for the purpose of enhancing the surface weather resistance of a cured product.

Examples of the ultraviolet absorber include a benzophenone-based ultraviolet absorber, a benzotriazole-based ultraviolet absorber, a salicylate-based ultraviolet absorber, and a substituted tolyl-based and a metal chelate-based compound, and a benzotriazole-based ultraviolet absorber is particularly preferable.

Examples of the benzotriazole-based ultraviolet absorber include Tinuvin P, Tinuvin 234, Tinuvin 326, Tinuvin 237, Tinuvin 328, and Tinuvin 329 (all the above manufactured by BASF Japan Ltd.), and ADK STAB LA-29, ADK STAB LA-32, and ADK STAB LA-36 (all the above manufactured by ADEKA Corporation), and they can be obtained as a commercially available product.

The ultraviolet absorber may be used either singly or in combination of two or more kinds thereof.

Use amount of the ultraviolet absorber is preferably 0.1 to 10 parts by weight, and more preferably 0.2 to 5 parts by weight relative to 100 parts by weight of the component (A).

### [Adhesiveness imparting agent]

In the curable composition, an adhesiveness imparting agent may be used for the purpose of improving the adhesiveness to various adherends as a substrate, under nonprimer conditions or primer treatment conditions. The adherend may be either an inorganic substrate or an organic substrate. Examples of the inorganic substrate include a vehicle member like a frame for car body and a panel for car body, glass, aluminum, stainless, zinc, copper, and mortar. Examples of the organic substrate include vinyl chloride, acryl, polyester, polyethylene, polypropylene, and polycarbonate.

Examples of the adhesiveness imparting agent include aminosilanes, epoxy silanes, isocyanate silanes, mercapto silanes, vinyl type unsaturated group-containing silanes, halogen-containing silanes, and isocyanurate silanes.

Examples of the aminosilanes include amino-group-containing silane compounds such as γ-aminopropyltrimethoxysilane, γ-aminopropyltriethoxysilane, γ-aminopropyltriisopropoxysilane, γ-aminopropyldimethoxymethylsilane, γ-aminopropyldiethoxymethylsilane, N-(β-aminoethyl)-γ-aminopropyltrimethoxysilane, N-(β-aminoethyl)-γ-aminopropyldimethoxymethylsilane, N-(β-aminoethyl)-γ-aminopropyltriethoxysilane, N-(β-aminoethyl)-γ-aminopropyldiethoxymethylsilane, N-(β-aminoethyl)-γ-aminopropyltriisopropoxysilane, N-(β-(β-aminoethyl)aminoethyl)-γ-aminopropyltrimethoxysilane, N-(6-aminohexyl)-γ-aminopropyltrimethoxysilane, γ-(N-ethylamino)-β-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, (β-aminoethyl)aminomethyltrimethoxysilane, and N,N'-bis[3-(trimethoxysilyl)propyl]ethylene diamine. Furthermore, ketimine silane type compounds such as N-(1,3-dimethylbutylidene)-3-(triethoxysilyl)-1-propaneamine can be mentioned.

Examples of the epoxy silanes include γ-glycidoxypropyltrimethoxysilane, γ-glycidoxypropyltriethoxysilane, γ-glycidoxypropyldimethoxymethylsilane, β-(3,4-epoxycyclohexyl)ethyltrimethoxysilane, and β-(3,4-epoxycyclohexyl)ethyltriethoxysilane.

Examples of the isocyanate silanes include γ-isocyanatopropyltrimethoxysilane, γ-isocyanatopropyltriethoxysilane, γ-isocyanatopropyldiethoxymethylsilane, γ-isocyanatopropyldimethoxymethylsilane, isocyanatomethyltrimethoxysilane, and isocyanatomethyldimethoxymethylsilane.

Examples of the mercapto silanes include γ-mercaptopropyltrimethoxysilane, γ-mercaptopropyltriethoxysilane, γ-mercaptopropyldimethoxymethylsilane, γ-mercaptopropyldiethoxymethylsilane, and mercaptomethyltriethoxysilane.

Examples of the carboxy silanes include β-carboxyethyltriethoxysilane, β-carboxyethylphenylbis(2-methoxyethoxy)silane and N-β-(carboxymethyl)aminoethyl-γ-aminopropyltrimethoxysilane.

Examples of the vinyl type unsaturated group-containing silanes include vinyltrimethoxysilane, vinyltriethoxysilane, 3-(meth)acryloyloxypropyltrimethoxysilane, 3-(meth)acryloyloxypropyldimethoxymethylsilane, 3-(meth)acryloyloxypropyltriethoxysilane, 3-(meth)acryloyloxypropyldiethoxymethylsilane, (meth)acryloyloxymethyltrimethoxysilane, (meth)acryloyloxymethyldimethoxymethylsilane, (meth)acryloyloxymethyltriethoxysilane, and (meth)acryloyloxymethyldiethoxymethylsilane.

Examples of halogen-containing silanes include γ-chloropropyltrimethoxysilane.

Examples of isocyanurate silanes include tris(trimethoxysilyl)isocyanurate.

Among those adhesiveness imparting agents, for ensuring good adhesiveness, aminosilanes or epoxy silanes are preferred, and γ-aminopropyltrimethoxysilane, N-(β-aminoethyl)-γ-aminopropyltrimethoxysilane, N-(β-aminoethyl)-γ-aminopropyldimethoxymethylsilane, γ-glycidoxypropyltrimethoxysilane, γ-glycidoxypropyltriethoxysilane, and γ-glycidoxypropyldimethoxymethylsilane are more preferred, and γ-aminopropyltrimethoxysilane, N-(β-aminoethyl)-γ-aminopropyltrimethoxysilane, and N-(β-aminoethyl)-γ-aminopropyldimethoxymethylsilane are particularly preferred.

The adhesiveness imparting agent may be used either singly or in combination of two or more kinds thereof.

Use amount of the adhesiveness imparting agent is preferably 0.01 to 20 parts by weight, more preferably 0.1 to 10 parts by weight, and even more preferably 1 to 7 parts by weight relative to 100 parts by weight of the component (A). If the use amount of the adhesiveness imparting agent is less than 0.01 parts by weight, there may be a cased in which the effect of improving the adhesiveness is not obtained at desired level. If the use amount of the adhesiveness imparting agent exceeds 20 parts by weight, there may be a case in which a cured product with favorable strength is hard to obtain or a long period of time is required for curing.

The curable composition can also be used as a two liquid type composition in which the polymer as a main component and a curing catalyst or the like are stored in different packages, and are mixed right before use. However, from the viewpoint of easy use, it is suitably used as a one liquid type composition.

In the case of the one liquid type curable composition, since all the formulation components are blended in advance, it is preferred that the water-containing formulation components are dehydrated and dried in advance and used later, or dehydrated by, for example, the application of reduced pressure during mixing and kneading. For a case in which the curable composition is a two liquid type composition, since the curing catalyst needs not be mixed in a main formulation containing the polymer having a reactive silicon group, gellation is less likely to occur even when a small amount of water remains in the blended formulation. However, dehydration and drying are preferably performed when long-term storage stability is required. Suitable methods for dehydration and drying are thermal drying or dehydration under reduced pressure in the case of solid such as powder. When a liquid phase product is to be dehydrated and dried, dehydration under reduced pressure or dehydration using a dehydrating agent, for example, synthetic zeolite, active alumina, silica gel, quick lime, or magnesium oxide is preferable. In addition to these methods for dehydration and drying, dehydration may also be carried out by adding an alkoxysilane compound such as n-propyltrimethoxysilane, vinyltrimethoxysilane, vinylmethyldimethoxysilane, methyl silicate, ethyl silicate, γ-mercaptopropyldimethoxymethylsilane, γ-mercaptopropyldiethoxymethylsilane, or γ-glycidoxypropyltrimethoxysilane, to react with water. Furthermore, dehydration may be performed by adding an oxazolidine compound such as 3-ethyl-2-methyl-2-(3-methylbutyl)-1,3-oxazolidine to react with water. Furthermore, dehydration may be performed by adding a small amount of an isocyanate compound to react water with the isocyanate group.

Use amount of the dehydrating agent, particularly, a silicon compound that can react with water such as vinyltrimethoxysilane, is preferably 0.1 to 20 parts by weight, and more preferably 0.5 to 10 parts by weight relative to 100 parts by weight of the component (A).

### [Other additives]

In the curable composition, additives other than those described above may be blended for the purpose of adjusting general physical properties of the curable composition or a cured product.

Examples of other additives include an oxygen curable substance (e.g., dry oil such as tung oil, linseed oil and the like), a photocurable substance (e.g., unsaturated acryl-based compound), a compound (e.g., tris(trimethylsilyloxy)propane, phenyloxytrimethylsilane, tristrimethylsilylated product of trimethylol propane) to generate a compound having a monovalent silanol group by hydrolysis (e.g., trimethylsilanol), an agent for modifying physical properties such as dialkyl dialkoxysilane, a tackifier resin (e.g., styrene-based copolymer, phenol resin, modified phenol resin, terpene-based resin, terpene phenol resin, xylene-phenol resin, cyclopentadiene resin, cyclopentadiene-phenol resin, coumarone indene resin, rosin resin, rosin ester resin, hydrogenated rosin ester resin, xylene resin, low molecular weight polystyrene-based resin, petroleum resin, and hydrogenated petroleum resin), a silicate compound (e.g., tetraalkoxysilane or a partially hydrolyzed condensate of tetraalkoxysilane), thermally expandable microparticle hollow material, an inorganic balloon (e.g., glass balloon, shirasu balloon, silica balloon, and fly ash balloon), an organic balloon (e.g., resin balloon formed of any one of a phenol resin, epoxy resin, urea resin, vinylidene chloride resin, polystyrene resin, styrene-based copolymer, polymethacrylate, polyvinyl alcohol, vinylidene chloride-acrylonitrile copolymer, acrylonitrile-methacrylonitrile copolymer, acrylonitrile-methyl methacrylate copolymer, and vinylidene chloride-acrylonitrile divinyl benzene copolymer), an agent for modifying curability, a radical inhibitor, a metal inactivating agent, an antiozonant, a phosphorus peroxide decomposer, a lubricant, a pigment, a foaming agent, a repellent for white ants, a fungicide, and a flame retardant. Those additives may be used either singly or in combination of two or more kinds thereof.

### [Method for producing curable composition]

The method for producing the curable composition is not particularly limited, and a common method including blending the above components and kneading them using a mixer, a roll, or a kneader in batch mode or continuous mode at room temperature or under heating, with under atmospheric pressure or reduced pressure, or dissolving and mixing the components by using a small amount of a suitable solvent can be used, for example.

### <Specific method for producing laminate>

Upon exposure to air, the curable composition explained above forms a three-dimensional network structure even at room temperature by an action of moisture, and it is cured to a cured product accordingly. Many of those cured products exhibit rubber-like elasticity. The curable composition can be used as a sealing material, an adhesive, a coating agent, and/or a sealing agent for automobiles including bus, truck, and car, boats and ships, railway cars, elevators, and containers, and it is most preferably used as a coating agent. In addition, it is more preferably used for an automobile or a railway car, and most preferably used for an automobile.

Steps for manufacturing an automobile broadly consist of a car body assembling step (i.e., welding step), an application step, and an assembling step (i.e., step for mounting compartments). Among the above steps, the aforementioned curable composition is used for the application step, in particular.

During the application step, the curable composition is coated on a car body for the purpose of having protection against water, corrosion, or the like, and it is cured by aging at room temperature. Thereafter, a coating material is applied on a car body and a cured curable composition, and the coating material is cured by heating.

Namely, by using the aforementioned curable composition for the method including the following Steps 1 to 4, a laminate is produced. The curable composition is particularly used for an application step of the steps for manufacturing an automobile.

### (Step 1)

Step 1 is a step for coating the curable composition containing the component (A), the component (B), and the component (C) on a substrate.

Examples of the substrate include various substrates such as inorganic substrate like glass, aluminum, stainless, zinc, copper, mortar, a frame for car body, and a panel for car body, and an organic substrate. Examples of the organic substrate include vinyl chloride, acrylic resin, polyester, polyethylene, polypropylene, and polycarbonate.

The curable composition to be coated may be either a one liquid type curable composition, or a composition prepared by mixing a two liquid type composition. The method for coating is not particularly limited, and it can be carried out by a known method.

### (Step 2)

Step 2 is a step for aging the curable composition, which has been coated in Step 1, at room temperature for curing.

The curing temperature is not particularly limited, and it is preferably room temperature, more preferably 0°C to 40°C, even more preferably 10°C to 35°C, and most preferably 15°C to 30°C.

The curing time is not particularly limited, and it would be favorable if at least a surface of the curable composition is cured. The curing time is preferably 1 to 48 hours, more preferably 2 to 36 hours, even more preferably 5 to 24 hours, and most preferably 12 to 24 hours.

### (Step 3)

Step 3 is a step for applying a coating material on a cured product of the curable composition, which has been cured by Step 2.

### (Step 4)

Step 4 is a step for curing the coating material applied by Step 3 at 100°C or higher for curing.

Examples of the coating material include an epoxy resin-based coating material, an acryl resin-based coating material, a polyester resin-based coating material, a melamine resin-based coating material, an alkyd resin-based coating material, and the like. They can be any one of a water-based coating material, a solvent-based coating material, and a powder-based coating material. Furthermore, the coating material can be a primer like epoxy resin-based, acryl resin-based, and urethane resin-based. The coating method is not particularly limited, and the coating can be carried out by a known method.

The temperature for curing a coating material is preferably 100°C or higher, more preferably 100°C to 230°C, even more preferably 100°C to 220°C, particularly preferably 100°C to 200°C, and most preferably 100°C to 180°C. Furthermore, from the viewpoint of curing the coating material within a short time, the curing temperature is preferably 160°C to 230°C, and more preferably 180°C to 220°C, for example. The curing time is preferably 10 minutes to 5 hours, more preferably 10 minutes to 3 hours, and even more preferably 10 minutes to 1 hour.

### EXAMPLES

The present invention is explained specifically hereinbelow, but the present invention is not limited to them.

### (Synthesis example 1)

Polymerization of propylene oxide was performed in the presence of a zinc hexacyanocobaltate-glyme complex catalyst with, as an initiator, polyoxypropylene triol having a molecular weight of approximately 3,000, to obtain a hydroxy group-terminal polyoxypropylene triol having a number average molecular weight of approximately 16,400 (polystyrene-equivalent molecular weight measured by using liquid transport system: GPC of HLC-8120 manufactured by Tosoh Corporation, column: TSK-GEL H type manufactured by Tosoh Corporation, solution: THF). After 1.2 equivalents of NaOMe in methanol solution were added relative to hydroxy group of the hydroxy group-terminal polyoxypropylene triol, the methanol was distilled off, and 1.5 equivalents of allyl chloride were further added relative to the hydroxy group to convert the terminal hydroxy group to an allyl group.

n-Hexane (300 parts by weight) and water (300 parts by weight) were added and mixed with the obtained unpurified allyl group-terminal polyoxypropylene triol (100 parts by weight), and water was removed by centrifugation. The obtained hexane solution was further added with water (300 parts by weight) and the obtained mixture was stirred. Water was removed again by centrifugation, and the hexane was removed by devolatilizing under reduced pressure. According to the above operations, allyl group-terminal polyoxypropylene triol having a number average molecular weight of about 16,400 was obtained.

Thus-obtained allyl group-terminal polyoxypropylene triol (100 parts by weight) was reacted with dimethoxymethylsilane (1.78 parts by weight) at 90°C for 2 hours, using 36 ppm platinum divinyldisiloxane complex (i.e., isopropanol solution with platinum content of 3% by weight) as a catalyst, and the unreacted dimethoxymethylsilane was removed under reduced pressure.

As a result, a branched polyoxypropylene polymer (a1) having a number average molecular weight of 16,400 (polystyrene-converted molecular weight measured by GPC) and 2.2 terminal dimethoxymethylsilyl groups on average per molecule according to ¹H-NMR analysis was obtained.

### (Example 1)

With regard to 100 parts by weight of the polymer (a1) which has been obtained in Synthesis example 1, 10 parts by weight of polypropylene glycol as a plasticizer (manufactured by Mitsui Chemical SKC Polyurethanes Inc., product name; ACTCOL P-23, number average molecular weight; 3000), 40 parts by weight of 4,5-epoxyhexahydrophthalic acid di-2-ethylhexyl ester as the component (B1) (manufactured by New Japan Chemical Co., Ltd., product name: SANSO CIZER E-PS), 160 parts by weight of surface treated colloidal calcium carbonate (manufactured by Takehara Kagaku Kogyo Co., Ltd., product name: NEOLIGHT SP), 54 parts by weight of ground calcium carbonate (product name: LM2200, manufactured by Maruo Calcium Co., Ltd.), and 5 parts by weight of an antioxidant (manufactured by BASF Japan Ltd., product name: IRGANOX 245) were weighed, and, after mixing them by using a spatula, they were dispersed by being passed 3 times through three roll mills. After that, drying under reduced pressure was carried out for 2 hours at 120°C using a planetary mixer followed by cooling to 50°C or lower. Then, 4 parts by weight of vinyltrimethoxysilane (manufactured by Momentive Performance Materials, product name: Silquest A-171) as a dehydrating agent and 3 parts by weight of N-(β-aminoethyl)-γ-aminopropyltrimethoxysilane (manufactured by Momentive Performance Materials, product name: Silquest A-1120) as an adhesiveness imparting agent were added and mixed. Furthermore, as a condensation catalyst, 2 parts by weight of dibutyl tin bis(acetylacetonate) (manufactured by Nitto Kasei Co., Ltd., product name: NEOSTANN U-220H) were added thereto followed by mixing to obtain a curable composition. The obtained curable composition was sealed in a moisture-proof container followed by sealing to obtain a one liquid type curable composition.

### (Example 2)

Except that 40 parts by weight of 4,5-epoxyhexahydrophthalic acid di-9,10-epoxystearyl ester (manufactured by New Japan Chemical Co., Ltd., product name: SANSO CIZER E-PO) are used instead of 40 parts by weight of 4,5-epoxyhexahydrophthalic acid di 3-ethylhexyl ester in Example 1, a one liquid type curable composition was obtained in the same manner as Example 1.

### (Example 3)

Except that 40 parts by weight of epoxyfatty acid butyl ester (manufactured by New Japan Chemical Co., Ltd., product name: SANSO CIZER E-4030, molecular weight of approximately 350) as the component (B2) are used instead of 40 parts by weight of 4,5-epoxyhexahydrophthalic acid di-2-ethylhexyl ester in Example 1, a one liquid type curable composition was obtained in the same manner as Example 1.

### (Comparative Example 1)

Except that 25 parts by weight of 4,5-epoxyhexahydrophthalic acid di-2-ethylhexyl ester and 25 parts by weight of polypropylene glycol are used instead of 40 parts by weight of 4,5-epoxyhexahydrophthalic acid di-2-ethylhexyl ester and 10 parts by weight of polypropylene glycol, respectively, in Example 1, a one liquid type curable composition was obtained in the same manner as Example 1.

### (Comparative Example 2)

Except that 40 parts by weight of epoxidized soybean oil (manufactured by New Japan Chemical Co., Ltd., product name: SANSO CIZER E-2000H) are used instead of 40 parts by weight of 4,5-epoxyhexahydrophthalic acid di-2-ethylhexyl ester in Example 1, a one liquid type curable composition was obtained in the same manner as Example 1.

### (Comparative Example 3)

Except that 40 parts by weight of bisphenol A type epoxy resin (manufactured by Mitsubishi Chemical Corporation, product name: jER828) are used instead of 40 parts by weight of 4,5-epoxyhexahydrophthalic acid di-2-ethylhexyl ester in Example 1, a one liquid type curable composition was obtained in the same manner as Example 1.

### (Comparative Example 4)

Except that 40 parts by weight of phthalic acid diisodecyl ester (manufactured by J-PLUS Co., Ltd., product name: DIDP) are used instead of 40 parts by weight of di 4,5-epoxyhexahydrophthalic acid di-2-ethylhexyl ester in Example 1, a one liquid type curable composition was obtained in the same manner as Example 1.

### (Comparative Example 5)

Except that 40 parts by weight of 1,2-cyclohexane dicarboxylic acid diisononyl ester (manufactured by BASF, product name: Hexamoll DINCH) are used instead of 40 parts by weight of 4,5-epoxyhexahydrophthalic acid di-2-ethylhexyl ester in Example 1, a one liquid type curable composition was obtained in the same manner as Example 1.

### (Comparative Example 6)

Except that 40 parts by weight of 4-cyclohexene-1,2-dicarboxylic acid di-2-ethylhexyl ester (manufactured by Tokyo Chemical Industry Co., Ltd., reagent) are used instead of 40 parts by weight of di 4,5-epoxyhexahydrophthalic acid di-2-ethylhexyl ester in Example 1, a one liquid type curable composition was obtained in the same manner as Example 1.

### (Comparative Example 7)

Except that no antioxidant is added instead of 5 parts by weight of the antioxidant in Example 1, a one liquid type curable composition was obtained in the same manner as Example 1.

By using the one liquid type curable composition which has been prepared in each of the above Examples and Comparative Examples and following the methods described below, a thermal foaming resistance test, a thermal degradation resistance test, and a paint adhesion test were carried out. The results of those tests are described in Table 1 and Table 2. Furthermore, because the one liquid type curable composition obtained from Comparative Example 3 showed an occurrence of curing inside a cartridge used for coating, no evaluation was carried out therefor.

### (Thermal foaming resistance test)

The obtained curable composition was coated to have a thickness of 3 mm, and then aged for 20 hours at 23°C (relative humidity: 50%). After that, it was aged for 60 minutes in a dryer at 180°C. After taking it out followed by bringing it back to room temperature (23°C), presence or absence of foaming inside a cured product was visually examined.

### (Thermal degradation resistance test)

The obtained curable composition was coated to have a thickness of 3 mm, and then aged for 20 hours at 23°C (relative humidity: 50%). After that, it was aged for 60 minutes in a dryer at 180°C. After taking it out followed by bringing it back to room temperature (23°C), the surface state of a cured product was visually examined. With regard to the evaluation, if absolutely no problem is observed from a cured product, it was evaluated as good (i.e., without degradation), if degradation is observed from the periphery of a cured product, it was evaluated as bad, and if degradation is observed all over the cured product, it was evaluated as Very Bad (with degradation).

### (Paint adhesion test)

The obtained curable composition was coated to have a thickness of 3 mm, and then aged for 20 hours at 23°C (relative humidity: 50%). On a surface of the cured composition, an epoxy resin-based primer was coated as a coating material, and it was immediately aged for 25 minutes in a dryer at 100°C. After taking it out followed by bringing it back to room temperature (23°C), based on a cross-cut test method described in JIS K5600 and/or a cross-cut test method described in Old JIS K5400, a checkerboard square test (25 squares) with an interval of 2 mm was carried out by using cellophane tape manufactured by Nichiban Co., Ltd. The evaluation was expressed in terms of the number of squares (boxes) in the checkerboard in which the primer has remained compared to the number of entire squares present in the checkerboard (i.e., 25 squares).

**[Table 1]**

| | | Example | | |
|---|---|---|---|---|
| | | 1 | 2 | 3 |
| Component (A) | Polymer (a1) | 100 | 100 | 100 |
| Plasticizer | Polypropylene glycol | 10 | 10 | 10 |
| Component (B1) | SANSO CIZER E-PS (*1) | 40 | | |
| | SANSO CIZER | | 40 | |
| | E-PO (*2) | | | |
| Component (B2) | SANSO CIZER E-4030 (*3) | | | 40 |
| Non-alicyclic epoxy compound | SANSO CIZER E-2000H (*4) | | | |
| Bisphenol A type epoxy resin | jER828 (*5) | | | |
| Phthalic acid ester plasticizer | DIDP | | | |
| Alicyclic compound not containing epoxy group | Hexamoll DINCH (*6) | | | |
| | 4-Cyclohexene-1,2-dicarboxylic acid di-2-ethylhexyl ester | | | |
| Component (C) | IRGANOX 245 | 5 | 5 | 5 |
| Filler | NEOLIGHT SP | 160 | 160 | 160 |
| | LM2200 | 54 | 54 | 54 |
| Dehydrating agent | A-171 | 4 | 4 | 4 |
| Adhesiveness imparting agent | A-1120 | 3 | 3 | 3 |
| Catalyst | U-220H | 2 | 2 | 2 |
| Thermal foaming resistance test | | Not foamed | Not foamed | Not foamed |
| Thermal degradation resistance test | | Good | Good | Good |
| Paint adhesion test (checkboard square test) | | 25 | 25 | 25 |

| | | | | |
|---|---|---|---|---|
| *1: Epoxyhexahydrophthalic acid di-2-ethylhexyl ester (New Japan Chemical Co., Ltd.) *2: Epoxyhexahydrophthalic acid di-9,10-epoxystearyl ester (New Japan Chemical Co., Ltd.) *3: Epoxidized fatty acid butyl ester (New Japan Chemical Co., Ltd.) *4: Epoxidized soybean oil (New Japan Chemical Co., Ltd.) *5: Bisphenol A type epoxy resin (Mitsubishi Chemical Corporation) *6: 1,2-Cyclohexane dicarboxylic acid diisononyl ester(BASF) | | | | |

**[Table 2]**

| | | Comparative Example | | | | | | |
|---|---|---|---|---|---|---|---|---|
| | | 1 | 2 | 3 | 4 | 5 | 6 | 7 |
| Component (A) | Polymer (a1) | 100 | 100 | 100 | 100 | 100 | 100 | 100 |
| Plasticizer | Polypropylene glycol | 25 | 10 | 10 | 10 | 10 | 10 | 10 |
| Component (B1) | SANSO CIZER E-PS (*1) | 25 | | | | | | 40 |
| | SANSO CIZER E-PO (*2) | | | | | | | |
| Component (B2) | SANSO CIZER E-4030 (*3) | | | | | | | |
| Non-alicyclic epoxy compound | SANSO CIZER E-2000H (*4) | | 40 | | | | | |
| Bisphenol A type epoxy resin | jER828 (*5) | | | 40 | | | | |
| Phthalic acid ester plasticizer | DIDP | | | | 40 | | | |
| Alicyclic compound not containing epoxy group | Hexamoll DINCH (*6) | | | | | 40 | | |
| | 4-Cyclohexene-1,2-dicarboxylic acid di-2-ethylhexyl ester | | | | | | 40 | |
| Component (C) | IRGANOX 245 | 5 | 5 | 5 | 5 | 5 | 5 | 0 |
| Filler | NEOLIGHT SP | 160 | 160 | 160 | 160 | 160 | 160 | 160 |
| | LM2200 | 54 | 54 | 54 | 54 | 54 | 54 | 54 |
| Dehydrating agent | A-171 | 4 | 4 | 4 | 4 | 4 | 4 | 4 |
| Adhesiveness imparting agent | A-1120 | 3 | 3 | 3 | 3 | 3 | 3 | 3 |
| Catalyst | U-220H | 2 | 2 | 2 | 2 | 2 | 2 | 2 |
| Thermal foaming resistance test | | Not foamed | Not foamed | Not evaluated | Not foamed | Not foamed | Not foamed | Not foamed |
| Thermal degradation resistance test | | Good | Good | | Good | Good | Good | Bad |
| Paint adhesion test (checkboard square test) | | 9 | 0 | | 15 | 20 | 23 | 24 |

| | | | | | | | | |
|---|---|---|---|---|---|---|---|---|
| *1 to *6 are the same as those described for Table 1. | | | | | | | | |

As it is clearly shown in Table 1, it was found that, when the curable composition with predetermined composition prepared in Examples is used, a laminate which includes a substrate, a cured product of the curable composition, and a coating film of a coating material, and has excellent thermal foaming resistance, thermal degradation resistance, and paint adhesion property can be produced. Furthermore, with regard to the paint adhesion property of Examples, there was a state in which not even the peeling near the squares of a checkerboard is present. Furthermore, with regard to the evaluation results of Table 1 and Table 2, slight discoloration was observed from Example 1 and Comparative Example 1 according to the thermal degradation resistance test. Furthermore, with regard to the paint adhesion property of Comparative Examples, peeling near the squares of a checkerboard was observed from Comparative Examples 5 and 6.

## Claims

1. A method for producing a laminate comprising a substrate, a cured product of a curable composition, and a coating film of a coating material,
wherein the method includes curing the coating material by heating,
the cured product of the curable composition is present on the substrate,
the coating film is present on the cured product of the curable composition,
the curable composition comprises (A) a polyoxyalkylene polymer having a reactive silicon group, (B) an epoxy plasticizer, and (C) an antioxidant,
the amount of (B) the epoxy plasticizer is 30 to 100 parts by weight relative to 100 parts by weight of (A) the polyoxyalkylene polymer having a reactive silicon group,
the amount of (C) the antioxidant is 2 to 10 parts by weight relative to 100 parts by weight of (A) the polyoxyalkylene polymer having a reactive silicon group,
(B) the epoxy plasticizer is (B1) epoxyhexahydrophthalic acid dialkyl ester and/or (B2) epoxidized fatty acid alkyl ester, an alkyl group (b1) of the alkyl ester moiety in (B1) the epoxyhexahydrophthalic acid dialkyl ester is a linear or branched alkyl group having 1 to 20 carbon atoms which may be epoxidized, and
an alkyl group (b2) of the alkyl ester moiety in (B2) the epoxidized fatty acid alkyl ester is a linear or branched alkyl group having 1 to 20 carbon atoms.

2. The method for producing a laminate according to claim 1, wherein the curing of the coating material is carried out at 100°C or higher.

3. The method for producing a laminate according to claim 1 or 2, wherein the component (A) is a polyoxyalkylene polymer which has a reactive silicon group and contains a urethane bond and/or a urea bond.

4. The method for producing a laminate according to any one of claims 1 to 3, wherein the main chain structure of the component (A) is a polyoxypropylene polymer.

5. The method for producing a laminate according to any one of claims 1 to 4, wherein the reactive silicon group of the component (A) is represented by the following General Formula (1) :
-SiR¹₃₋ₐXₐ (1)
wherein, in General Formula (1), each R¹ independently represents an alkyl group having 1 to 20 carbon atoms, an aryl group having 6 to 20 carbon atoms, an aralkyl group having 7 to 20 carbon atoms, or a triorganosiloxy group represented by -OSi(R')₃:
in the formula, each R' independently represents a hydrocarbon group having 1 to 20 carbon atoms,
each X independently represents a hydroxy group or a hydrolyzable group, and
a represents an integer of 1 to 3.

6. The method for producing a laminate according to any one of claims 1 to 5, wherein (C) the antioxidant is a hindered phenol-based antioxidant.

7. The method for producing a laminate according to any one of claims 1 to 6, wherein the method includes the following steps 1 to 4:
step 1: a step of coating the curable composition containing the component (A), the component (B), and the component (C) on a substrate,
step 2: a step of aging the curable composition, which has been coated in step 1, at room temperature for curing,
step 3: a step of applying a coating material on top of a cured product of the curable composition, which has been cured in step 2, and
step 4: a step of curing the coating material, which has been applied in step 3, by heating at 100°C or higher.

8. The method for producing a laminate according to any one of claims 1 to 7, wherein the curable composition is a one liquid type composition.

9. A laminate comprising a substrate, a cured product of a curable composition, and a coating film of a coating material, wherein the cured product of the curable composition is present on the substrate,
the coating film is present on the cured product of the curable composition and cured by heating,
the curable composition comprises (A) a polyoxyalkylene polymer having a reactive silicon group, (B) an epoxy plasticizer, and (C) an antioxidant,
the amount of (B) the epoxy plasticizer is 30 to 100 parts by weight relative to 100 parts by weight of (A) the polyoxyalkylene polymer having a reactive silicon group,
the amount of (C) the antioxidant is 2 to 10 parts by weight relative to 100 parts by weight of (A) the polyoxyalkylene polymer having a reactive silicon group,
(B) the epoxy plasticizer is (B1) epoxyhexahydrophthalic acid dialkyl ester and/or (B2) epoxidized fatty acid alkyl ester, an alkyl group (b1) of the alkyl ester moiety in (B1) the epoxyhexahydrophthalic acid dialkyl ester is a linear or branched alkyl group having 1 to 20 carbon atoms which may be epoxidized, and
an alkyl group (b2) of the alkyl ester moiety in (B2) the epoxidized fatty acid alkyl ester is a linear or branched alkyl group having 1 to 20 carbon atoms.

10. The laminate according to claim 9, wherein the curable composition is a one liquid type composition.

## Patentansprüche

1. Ein Verfahren zur Herstellung eines Laminats umfassend ein Substrat, ein gehärtetes Produkt aus einer härtbaren Zusammensetzung und einen Beschichtungsfilm aus einem Beschichtungsmaterial,
wobei das Verfahren das Härten des Beschichtungsmaterials durch Erwärmen einschließt,
das gehärtete Produkt aus der härtbaren Zusammensetzung sich auf dem Substrat befindet,
der Beschichtungsfilm sich auf dem gehärteten Produkt aus der härtbaren Zusammensetzung befindet,
die härtbare Zusammensetzung (A) ein Polyoxyalkylenpolymer mit einer reaktiven Siliziumgruppe, (B) einen Epoxid-Weichmacher und (C) ein Antioxidans umfasst,
die Menge an (B) dem Epoxid-Weichmacher 30 bis 100 Gewichtsteile, bezogen auf 100 Gewichtsteile von (A) dem Polyoxyalkylenpolymer mit einer reaktiven Siliziumgruppe, beträgt,
die Menge an (C) dem Antioxidans 2 bis 10 Gewichtsteile, bezogen auf 100 Gewichtsteile von (A) dem Polyoxyalkylenpolymer mit einer reaktiven Siliziumgruppe, beträgt,
(B) der Epoxid-Weichmacher (B1) Epoxyhexahydrophthalsäure-Dialkylester und/oder (B2) epoxidierter Fettsäurealkylester ist,
eine Alkylgruppe (b1) der Alkylestereinheit in (B1) dem Epoxyhexahydrophthalsäure-Dialkylester eine lineare oder verzweigte Alkylgruppe mit 1 bis 20 Kohlenstoffatomen ist, die epoxidiert sein kann, und
eine Alkylgruppe (b2) der Alkylestereinheit in (B2) dem epoxidierten Fettsäurealkylester eine lineare oder verzweigte Alkylgruppe mit 1 bis 20 Kohlenstoffatomen ist.

2. Das Verfahren zur Herstellung eines Laminats nach Anspruch 1, wobei das Härten des Beschichtungsmaterials bei 100°C oder höher durchgeführt wird.

3. Das Verfahren zur Herstellung eines Laminats nach Anspruch 1 oder 2, wobei die Komponente (A) ein Polyoxyalkylenpolymer ist, das eine reaktive Siliziumgruppe aufweist und eine Urethanbindung und/oder eine Harnstoffbindung enthält.

4. Das Verfahren zur Herstellung eines Laminats nach einem der Ansprüche 1 bis 3, wobei die Hauptkettenstruktur der Komponente (A) ein Polyoxypropylenpolymer ist.

5. Das Verfahren zur Herstellung eines Laminats nach einem der Ansprüche 1 bis 4, wobei die reaktive Siliziumgruppe der Komponente (A) durch die folgende allgemeine Formel (1) dargestellt wird:
-SiR¹₃₋ₐXₐ (1)
wobei in der allgemeinen Formel (1) jedes R¹ unabhängig eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Triorganosiloxygruppe der Formel -OSi(R')₃, darstellt:
in der Formel jedes R' unabhängig eine Kohlenwasserstoffgruppe mit 1 bis 20 Kohlenstoffatomen darstellt,
jedes X unabhängig eine Hydroxygruppe oder eine hydrolysierbare Gruppe darstellt, und
a eine ganze Zahl von 1 bis 3 darstellt.

6. Das Verfahren zur Herstellung eines Laminats nach einem der Ansprüche 1 bis 5, wobei (C) das Antioxidans ein Antioxidans auf Basis eines gehinderten Phenols ist.

7. Das Verfahren zur Herstellung eines Laminats nach einem der Ansprüche 1 bis 6, wobei das Verfahren die folgenden Schritte 1 bis 4 umfasst:
Schritt 1: ein Schritt des Beschichtens der härtbaren Zusammensetzung, die die Komponente (A), die Komponente (B) und die Komponente (C) enthält, auf ein Substrat,
Schritt 2: ein Schritt des Alterns der härtbaren Zusammensetzung, die in Schritt 1 beschichtet wurde, bei Raumtemperatur zum Aushärten,
Schritt 3: ein Schritt des Auftragens eines
Beschichtungsmaterials auf ein gehärtetes Produkt aus der härtbaren Zusammensetzung, die in Schritt 2 gehärtet wurde,
und
Schritt 4: ein Schritt des Aushärtens des in Schritt 3 aufgetragenen Beschichtungsmaterials durch Erwärmen auf 100°C oder höher.

8. Das Verfahren zur Herstellung eines Laminats nach einem der Ansprüche 1 bis 7, wobei die härtbare Zusammensetzung eine Zusammensetzung des Typs ist, der aus einer einzigen Flüssigkeit besteht.

9. Ein Laminat, umfassend ein Substrat, ein gehärtetes Produkt aus einer härtbaren Zusammensetzung und einen Beschichtungsfilm aus einem Beschichtungsmaterial,
wobei sich das ausgehärtete Produkt aus der härtbaren Zusammensetzung auf dem Substrat befindet,
der Beschichtungsfilm sich auf dem gehärteten Produkt aus der härtbaren Zusammensetzung befindet und durch Erwärmen gehärtet wird,
die härtbare Zusammensetzung (A) ein Polyoxyalkylenpolymer mit einer reaktiven Siliziumgruppe, (B) einen Epoxid-Weichmacher und (C) ein Antioxidans enthält,
die Menge an (B) dem Epoxid-Weichmacher 30 bis 100 Gewichtsteile, bezogen auf 100 Gewichtsteile von (A) dem Polyoxyalkylenpolymer mit einer reaktiven Siliziumgruppe, beträgt,
die Menge an (C) dem Antioxidans 2 bis 10 Gewichtsteile, bezogen auf 100 Gewichtsteile von (A) dem Polyoxyalkylenpolymer mit einer reaktiven Siliziumgruppe, beträgt,
(B) der Epoxid-Weichmacher (B1) Epoxyhexahydrophthalsäure-Dialkylester und/oder (B2) epoxidierter Fettsäurealkylester ist,
eine Alkylgruppe (b1) der Alkylestereinheit in (B1) dem Epoxyhexahydrophthalsäure-Dialkylester eine lineare oder verzweigte Alkylgruppe mit 1 bis 20 Kohlenstoffatomen ist, die epoxidiert sein kann, und
eine Alkylgruppe (b2) der Alkylestereinheit in (B2) dem epoxidierten Fettsäurealkylester eine lineare oder verzweigte Alkylgruppe mit 1 bis 20 Kohlenstoffatomen ist.

10. Das Laminat nach Anspruch 9, wobei die härtbare Zusammensetzung eine Zusammensetzung des Typs ist, der aus einer einzigen Flüssigkeit besteht.

## Revendications

1. Méthode pour produire un stratifié comprenant un substrat, un produit durci d'une composition durcissable, et un film de revêtement en un matériau de revêtement, dans laquelle
la méthode comprend le durcissement du matériau de revêtement par chauffage,
le produit durci de la composition durcissable est présent sur le substrat,
le film de revêtement est présent sur le produit durci de la composition durcissable,
la composition durcissable comprend (A) un polymère de polyoxyalkylène ayant un groupe siliconé réactif, (B) un plastifiant époxy, et (C) un antioxydant,
la quantité du plastifiant époxy (B) est de 30 à 100 parties en poids pour 100 parties en poids du polymère polyoxyalkylène ayant un groupe siliconé réactif (A),
la quantité de l'antioxydant (C) est de 2 à 10 parties en poids pour 100 parties en poids du polymère de polyoxyalkylène ayant un groupe siliconé réactif (A),
le plastifiant époxy (B) est un ester dialkylique d'acide époxyhexahydrophtalique (B1) et/ou un ester alkylique d'acide gras époxydé (B2),
un groupe alkyle (b1) du fragment ester alkylique dans l'ester dialkylique d'acide époxyhexahydrophtalique (B1) est un groupe alkyle linéaire ou ramifié ayant 1 à 20 atomes de carbone qui peut être époxydé, et
un groupe alkyle (b2) du fragment ester alkylique dans l'ester alkylique d'acide gras époxydé (B2) est un groupe alkyle linéaire ou ramifié ayant 1 à 20 atomes de carbone.

2. Méthode pour produire un stratifié selon la revendication 1, dans laquelle le durcissement du matériau de revêtement est effectué à 100°C ou plus.

3. Méthode pour produire un stratifié selon la revendication 1 ou 2, dans laquelle le composant (A) est un polymère de polyoxyalkylène qui a un groupe siliconé réactif et qui contient une liaison uréthane et/ou une liaison urée.

4. Méthode pour produire un stratifié selon l'une quelconque des revendications 1 à 3, dans laquelle la structure de chaîne principale du composant (A) est un polymère de polyoxypropylène.

5. Méthode pour produire un stratifié selon l'une quelconque des revendications 1 à 4, dans laquelle le groupe siliconé réactif du composant (A) est représenté par la formule générale (1) suivante :
-SiR¹₃₋ₐXₐ (1)
dans laquelle, dans la formule générale (1), chaque R¹ représente indépendamment un groupe alkyle ayant 1 à 20 atomes de carbone, un groupe aryle ayant 6 à 20 atomes de carbone, un groupe aralkyle ayant 7 à 20 atomes de carbone, ou un groupe triorganosiloxy représenté par -OSi(R')₃,
dans la formule, chaque R' représente indépendamment un groupe hydrocarboné ayant 1 à 20 atomes de carbone,
chaque X représente indépendamment un groupe hydroxy ou un groupe hydrolysable, et
a représente un entier de 1 à 3.

6. Méthode pour produire un stratifié selon l'une quelconque des revendications 1 à 5, dans laquelle l'antioxydant (C) est un antioxydant à base de phénol encombré.

7. Méthode pour produire un stratifié selon l'une quelconque des revendications 1 à 6, laquelle méthode comprend les étapes 1 à 4 suivantes :
étape 1 : une étape de déposition de la composition durcissable contenant le composant (A), le composant (B), et le composant (C) sous forme de revêtement sur un substrat,
étape 2 : une étape de vieillissement de la composition durcissable, qui a été déposée dans l'étape 1, à la température ambiante pour qu'elle durcisse,
étape 3 : une étape d'application d'un matériau de revêtement au-dessus d'un produit durci de la composition durcissable, qui a été durcie dans l'étape 2, et
étape 4 : une étape de durcissement du matériau de revêtement, qui a été appliqué dans l'étape 3, par chauffage à 100°C ou plus.

8. Méthode pour produire un stratifié selon l'une quelconque des revendications 1 à 7, dans laquelle la composition durcissable est une composition du type à un seul liquide.

9. Stratifié comprenant un substrat, un produit durci d'une composition durcissable, et un film de revêtement en un matériau de revêtement, dans lequel
le produit durci de la composition durcissable est présent sur le substrat,
le film de revêtement est présent sur le produit durci de la composition durcissable et durci par chauffage,
la composition durcissable comprend (A) un polymère de polyoxyalkylène ayant un groupe siliconé réactif, (B) un plastifiant époxy, et (C) un antioxydant,
la quantité du plastifiant époxy (B) est de 30 à 100 parties en poids pour 100 parties en poids du polymère polyoxyalkylène ayant un groupe siliconé réactif (A),
la quantité de l'antioxydant (C) est de 2 à 10 parties en poids pour 100 parties en poids du polymère de polyoxyalkylène ayant un groupe siliconé réactif (A),
le plastifiant époxy (B) est un ester dialkylique d'acide époxyhexahydrophtalique (B1) et/ou un ester alkylique d'acide gras époxydé (B2),
un groupe alkyle (b1) du fragment ester alkylique dans l'ester dialkylique d'acide époxyhexahydrophtalique (B1) est un groupe alkyle linéaire ou ramifié ayant 1 à 20 atomes de carbone qui peut être époxydé, et
un groupe alkyle (b2) du fragment ester alkylique dans l'ester alkylique d'acide gras époxydé (B2) est un groupe alkyle linéaire ou ramifié ayant 1 à 20 atomes de carbone.

10. Stratifié selon la revendication 9, dans lequel la composition durcissable est une composition du type à un seul liquide.
